Europäisches Patentamt

European Patent Office

Office européen des brevets

(11) Veröffentlichungsnummer: **0 034 302**
A2

(12) # EUROPÄISCHE PATENTANMELDUNG

(21) Anmeldenummer: **81100776.4**

(22) Anmeldetag: **04.02.81**

(51) Int. Cl.³: **H 01 J 31/20**
**H 01 J 29/34**

(30) Priorität: **16.02.80 DE 3005946**

(43) Veröffentlichungstag der Anmeldung:
**26.08.81 Patentblatt 81/34**

(84) Benannte Vertragsstaaten:
**BE FR GB IT NL**

(71) Anmelder: **International Standard Electric Corporation**
**320 Park Avenue**
**New York New York 10022(US)**

(72) Erfinder: **Weiss, Eberhard**
**Bopserwaldstrasse 18**
**D-7000 Stuttgart 1(DE)**

(74) Vertreter: **Thul, Leo, Dipl.-Phys.**
**Kurze Strasse 8 Postfach 300 929**
**D-7000 Stuttgart 30(DE)**

(54) **Farbbildröhre ohne Schattenmaske und mit nur einer Elektronenkanone.**

(57) Bei der erfindungsgemäßen Farbbildröhre verlaufen Leuchtstoffstreifen dreier Grundfarben horizontal und werden von einem horizontal durchlaufenden Elektronenstrahl zum Leuchten angeregt. Die Farbart wird durch die vertikale Lage und Ausdehnung des Elektronenstrahls, die Farbhelligkeit durch den Strahlstrom bestimmt. Die erfindungsgemäße Farbbildröhre benötigt keine Schattenmaske und nur einen Elektronenstrahl.

EP 0 034 302 A2

Croydon Printing Company Ltd.

Patentanwalt

Dipl.-Phys. Leo Thul

Kurze Str. 8, Postfach 300 929

D-7000 Stuttgart 30

Deutschland

E.Weiss-14

## Farbbildröhre ohne Schattenmaske und mit nur einer Elektronenkanone

Die Erfindung betrifft Farbbildröhren mit einem Bildschirm mit Gruppen von Leuchtstoffstreifen, die durch auf sie auftreffende Elektronen zum Leuchten gebracht werden, und welche Elektronen durch ein Ablenksystem abgelenkt werden.

Zur Darstellung von Farben mit Farbbildröhren sind verschiedene technische Lösungen bekannt. Die meisten gehen von der Tatsache aus, daß zur eindeutigen Festlegung einer Farbe drei voneinander unabhängige Variable erforderlich sind. Jede Farbe ist durch Farbart und Farbhelligkeit gegeben. Zur Festlegung der Farbart sind zwei voneinander unabhängige Variable anzugeben. Daher ist die Farbart auch einfach in zwei dimensionalen Darstellungen, wie z.B. dem Farbkreis oder dem Farbdreieck darstellbar. In den meisten Arten von Farbbildröhren werden die drei voneinander unabhängigen Variablen technisch dadurch realisiert, daß drei Grundfarben, in der Regel Rot,

Dr. J/Sam                                                          ./.
21.12.1979

E.Weiss-14

Grün und Blau gewählt werden, daß zu diesen vorgegebenen Farben Leuchstoffe mit den entsprechenden Emissionsfarben ausgesucht werden, und daß diese Leuchtstoffe dann jeweils mit einem Elektronenstrahl, jeweils mit unterschiedlichem Strahlstrom angeregt werden. Die drei unabhängigen Variablen sind in diesem Falle also die unabhängig voneinander variierbaren Elektronenstrahlströme.

Durch die Methode, wie die verschiedenen Leuchtstoffe von den ihnen zugeordneten Elektronenstrahlen getroffen werden, unterscheiden sich die verschiedenen Farbbildröhrensysteme voneinander. Derzeit hat sich technisch das System durchgesetzt, in dem Gruppen von Leuchtstoffstreifen der Grundfarben vertikal auf einem Bildschirm angebracht sind, diese Leuchtstoffstreifen horizontal von einem Elektronenstrahl abgerastert werden, wobei dieser Elektronenstrahl, bevor er auf die Leuchtstoffstreifen trifft, zunächst eine sogenannte Farbauswahlelektrode durchsetzt. Diese Methode führt zu ausgezeichneten Farbdarstellungen, ist jedoch technisch sehr aufwendig. Aus der DE-OS 25 23 524 ist eine Farbbildröhre bekannt, bei der die Verwendung einer Farbauswahlelektrode nicht mehr erforderlich ist. Die Gruppen von Leuchtstoffstreifen sind dabei in horizontaler Richtung angeordnet und werden von drei unabhängig voneinander in ihren Strahlströmen einstellbaren Elektronenstrahlen in horizontaler Richtung abgefahren. Diese Lösung stellt schon eine erhebliche Vereinfachung gegenüber Farbbildröhren mit Farbauswahlelektroden dar. Ein erhebliches Problem besteht jedoch darin, daß jeder der drei Elektronenstrahlen in seiner vertikalen Richtung jederzeit genau eingestellt sein muss, um zu verhindern, daß durch einen Elektronenstrahl, welcher z.B. der Grundfarbe Rot zugeordnet

./.

ist, auch Leuchtstoffstreifen der Farben Grün oder Blau mit
zum Leuchten angeregt werden. Der Erfindung liegt nun die
Aufgabe zugrunde, eine Farbbildröhre mit einem Bildschirm
mit in Zeilenrichtung verlaufenden Gruppen von Leuchtstoffstreifen, welche Leuchtstoffstreifen durch auf sie auftreffende Elektronen zum Leuchten gebracht werden anzugeben, bei
der die Notwendigkeit der vertikalen Einstellung von drei in
ihren Strahlströmen unabhängig voneinander einstellbaren Elektronenstrahlen entfällt.

Die Lösung der Aufgabe ist im ersten Anspruch angegeben. Die
Farbbildröhre weist nur noch eine Elektronenkanone auf. Als
zur Darstellung jeder beliebigen Farbe erforderliche unabhängige drei Variable sind nun der Strahlauftreffort in vertikaler Richtung, der Strahldurchmesser und der Strahlstrom
festgelegt. Die technische Realisierbarkeit    jeder dieser
Einstellgrößen ist seit langem bekannt. Wie bei          bekannten Farbbildröhrensystemen mit drei in horizontaler Richtung über horizontal  liegende Leuchtstoffstreifen laufende
Elektronenstrahlen ist es auch bei der vorliegende Erfindung
vorteilhaft, die Elektronenstrahlen in ihrer vertikalen Lage
zu überwachen. Dazu werden kammförmige Elektroden an den
Rändern des Bildschirms im optisch nicht genutzten Bereich
angebracht, auf die der Elektronenstrahl bei seinem Zeilenlauf
auftrifft, wodurch ein Steuerpuls erzeugt wird, dessen Größe
von der Abweichung des Elektronenstrahls von der Zeilensollage
abhängt, und welcher Steuerpuls dazu benutzt wird, die Abweichung der Vertikalablenkung zu korrigieren. Eine besonders
vorteilhafte Ausführungsform der Zähne der kammförmigen Elektrode, welche eine eindeutige Festlegung der Richtung der Abweichung zuläßt, ist in einem weiteren Anspruch gegeben.

./.

Die Leuchtstoffstreifengruppen bestehen vorzugsweise aus drei
Streifen jeweils der Leuchtfarben Rot, Grün und Blau jeweils
der Farbart, die für den Empfang von Farbfernsehprogrammen
genormt ist.  Dadurch können auch bei Verwendung der neuen
Farbbildröhren in bisher bekannten Farbfernsehempfängern die
vorliegenden Eingangsschaltungen benutzt werden.


In einem Farbfernsehgerät mit einer herkömmlichen Bildröhre
liegen an der Bildröhre unter anderem drei Spannungen R, G,
B an, welche zur Einstellung der drei Elektronenstrahlströme
dienen.  In weiteren Ansprüchen ist angegeben, wie diese drei
Spannungen vorteilhafteweise ausgenutzt werden, um bei Verwendung für eine erfindungsgemäße Farbbildröhre damit den Strahlauftreffort, den Strahldurchmesser und den Strahlstrom festzulegen.

Der Erfindung wird im folgenden anhand von durch 6 Figuren
veranschaulichten Ausführungsbeispielen näher erläutert.  Es
zeigen:

Fig. 1:  Ausschnitt aus einem erfindungsgemäßen Bildschirm
         mit darauf auftreffenden Elektronenstrahlen unter-
         schiedlicher Lage und unterschiedlichen Strahldurch-
         messers

Fig. 2:  Ausschnitt aus einem erfindungsgemäßen Bildschirm
         mit kammförmigen Elektroden an den Seitenrändern
         des Bildschirms.

Fig. 3:  Vorteilhafte Ausführungsform der Zähne einer kammför-
         migen Elektrode gemäß Figur 2
         a = korrekte Lage eines Elektronenstrahls beim Auf-
             treffen auf einen Zahn

./.

E.Weiss-14

     b = nach unten von der Sollage abweichender Elektro-
        nenstrahl

     c = nach oben von der Sollage abweichender Elektronenstrahl

Fig. 4:  an einem Widerstand R gemäß Figur 1 abgegriffene
       Spannung beim Auftreffen eines Elektronenstrahles
       auf den Zahn einer kammförmigen Elektrode bei verschiedenen Lagen des Elektronenstrahles

Fig. 5:  rechteckiger Elektronenstrahl auf einer Gruppe von
       Leuchtstoffstreifen

Fig. 6:  ovaler Elektronenstrahl auf einer Gruppe von Leuchtstoffstreifen

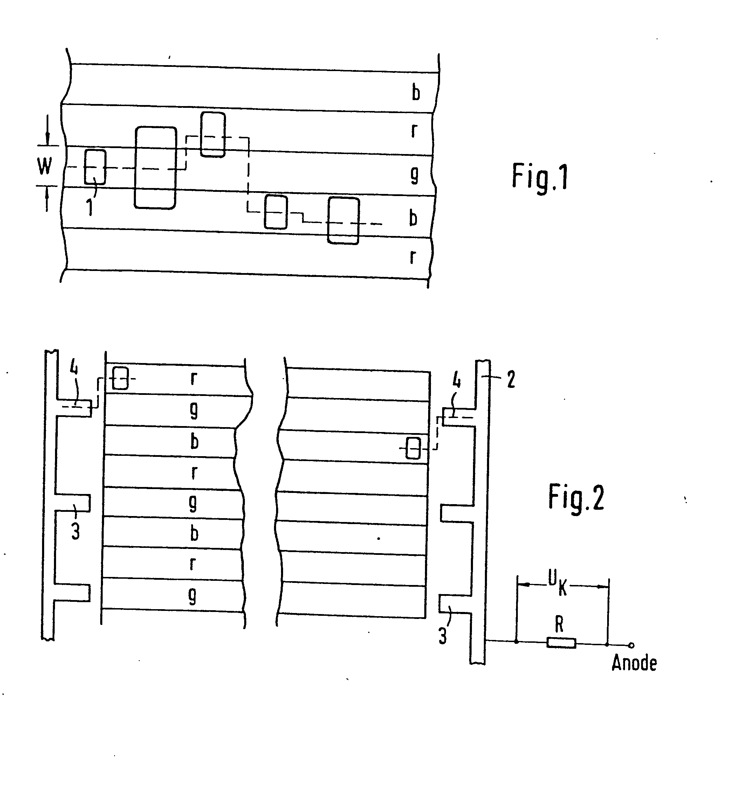

Figur 1 zeigt einen Ausschnitt aus einem Bildschirm der vorgeschlagenen Art. Leuchtstoffstreifen jeweils der Weite W erstrecken sich in horizontaler Richtung und sind vertikal
übereinander angeordnet. Gemäß den Farben Rot, Grün und Blau,
welche die Leuchtstoffstreifen beim Auftreffen von Elektronenstrahlen aussenden, sind die einzelnen Streifen mit r, g, b
bezeichnet. Die Leuchtstoffstreifen sind in ihrer Reihenfolge
so angeordnet, daß jeweils jeder vierte Leuchtstoffstreifen
wieder dieselbe Farbe aufweist wie der Ausgangsstreifen.
Jeweils drei aufeinander folgende Leuchtstoffstreifen bilden
eine Gruppe. In der Figur 1 sind weiterhin fünf Auftreffflecke
von Elektronenstrahlen auf den Leuchtstoffstreifen dargestellt.
Der erste Auftrefffleck von links liegt mit seinem Zentrum in
der Mitte eines grünen Leuchtstoffstreifens und ist in seiner
Ausdehnung so begrenzt, daß er die Ränder des grünen Leuchtstoffstreifens nicht überschreitet. Es wird also ein rein
grüner Punkt dargestellt, dessen Helligkeit noch über den
Strahlstrom einstellbar ist. Der zweite Auftrefffleck von
links liegt ebenfalls mit seinem Zentrum auf der Mitte des

./.

E.Weiss-14

grünen Leuchtstoffstreifens. Seine Ausdehnung ist jedoch erheblich größer als die des ersten Auftrefflecks, sodaß er
noch Teile des roten und des blauen Leuchtstoffstreifens mitüberdeckt. Es erscheint daher ein Punkt einer Farbe, welcher
einen großen Grünanteil und kleinere, jedoch gleich große Anteile von Rot und Blau enthält. Das Zentrum des dritten Auftrefflecks von links ist über den Oberrand des grünen Streifens etwas in das Gebiet des roten Leuchtstoffstreifens verschoben. Seine Ausdehnung ist so, daß er einen größeren Teil
des roten Leuchtstoffstreifens und einen kleineren Teil des
grünen Leuchtstoffstreifens überdeckt. Beim weiteren Fortschreiten des Elektronenstrahls nach links ist er in seiner
Lage so verschoben, daß er nun im vierten Auftrefffleck mit
seinem Zentrum in der Mitte des blauen Leuchtstoffstreifens
liegt und in seiner Ausdehnung die Grenzen des blauen Leuchstoffstreifens nicht überschreitet. Es wird daher ein rein
blauer Punkt dargestellt. Der fünfte Auftrefffleck nun ist
mit seinem Zentrum noch weiter vom grünen Leuchtstoffstreifen
weggerückt, und in seiner Ausdehnung so gewählt, daß eine
Farbe dargestellt wird, deren Farbart durch einen großen Blau-
und einen kleineren Rot-Anteil und deren Farbhelligkeit durch
die Größe des Strahlstromes gegeben ist. Es ist ersichtlich,
daß durch Lage, durch Ausdehnung und durch Strahlstrom eines
Elektronenstrahles jede beliebige Farbe darstellbar ist.

In bisherigen wurde der Einfachheithalber immer ein rechteckiger statt eine kreisrunder oder ovaler Auftrefffleck
dargestellt, wie er in Wirklichkeit auftritt. Die Vereinfachung durch den rechteckigen Auftrefffleck wird auch im
weiteren beibehalten. Das wirkliche Vorliegen des runden
Auftrefflecks ist für die Erfindung als solche unerheblich.
In folgenden angegebene Formeln würden jedoch erheblich komplizierter werden.

E.Weiss-14

Da die genaue Einhaltung einer vorgegebenen Lage eines Elektronenstrahles für die gewünschte Farbdarstellung von entscheidende Bedeutung ist, ist es von Vorteil, die vertikale Lage
des Elektronenstrahles zumindest zeitweise zu überprüfen.
Dazu ist vorgesehen, außerhalb des optisch genutzten Bereichs
des Bildschirmes an dessen rechtem und/oder linkem Rand eine
vertikal verlaufende kammförmige Elektrode anzubringen, wie
diese in Figur 2 dargestellt und mit  2  bezeichnet ist.
Auf die Zähne 3 dieser kammförmige Elektrode trifft der Elektronenstrahl am Ende oder am Anfang seines Zeilenlaufes auf und erzeugt eine Korrekturspannung welche zur Feststellung einer Abweichung des Elektronenstrahls von seiner Sollage und gegebenenfalls zu einer Korrektur benutzt wird.  Das Abnehmen  der
Korrekturspannung ist in Figur 2 schematisch dargestellt.
Die kammförmige Elektrode wird über einen Widerstand R mit
der Anode verbunden und die Korrekturspannung $U_k$ an diesem
Widerstand R  abgegriffen.  Eine genaue
Schaltung ist selbstverständlich aufwendiger, jedoch für die
vorliegende Erfindung unerheblich.  Die Figur 2 zeigt einen
Ausschnitt aus einem Bildschirm mit horizontal verlaufenden,
vertikal übereinander angeordneten Leuchtstoffstreifen.  An
den Rändern der Leuchtstoffstreifen sind links und rechts
jeweils eine kammförmige Elektrode 2 angebracht.  Der Lauf
eines Elektronenstrahls ist in den Randbereichen gestrichelt angedeutet.  Von links kommend wird der Elektronenstrahl zunächst
so eingestellt, daß er genau  in der Mitte eines Zahnes 3 der
kammförmigen Elektrode am linken Bildrand verläuft.  Bevor er
auf die Leuchtstoffstreifen auftrifft, wird der Elektronenstrahl so in seiner vertikalen Lage eingestellt, daß er den,
oder die Leuchtstoffstreifen trifft, die zur Darstellung der
gewünschten Farbe, hier im Bild der roten Farbe erforderlich

./.

- 8 -

sind. Am rechten Bildrand angekommen, wird durch den Elektronenstrahl die blaue Farbe dargestellt. Weiter nach rechts laufend verläßt der Elektronenstrahl die Leuchtstoffstreifen und kehrt in seine Sollzeilenlage 4 zurück. Bei Abweichung von dieser Sollzeilenlage wird er in Abhängigkeit von der gemeßenen Spannung $U_k$ auf die Sollage korrigiert.

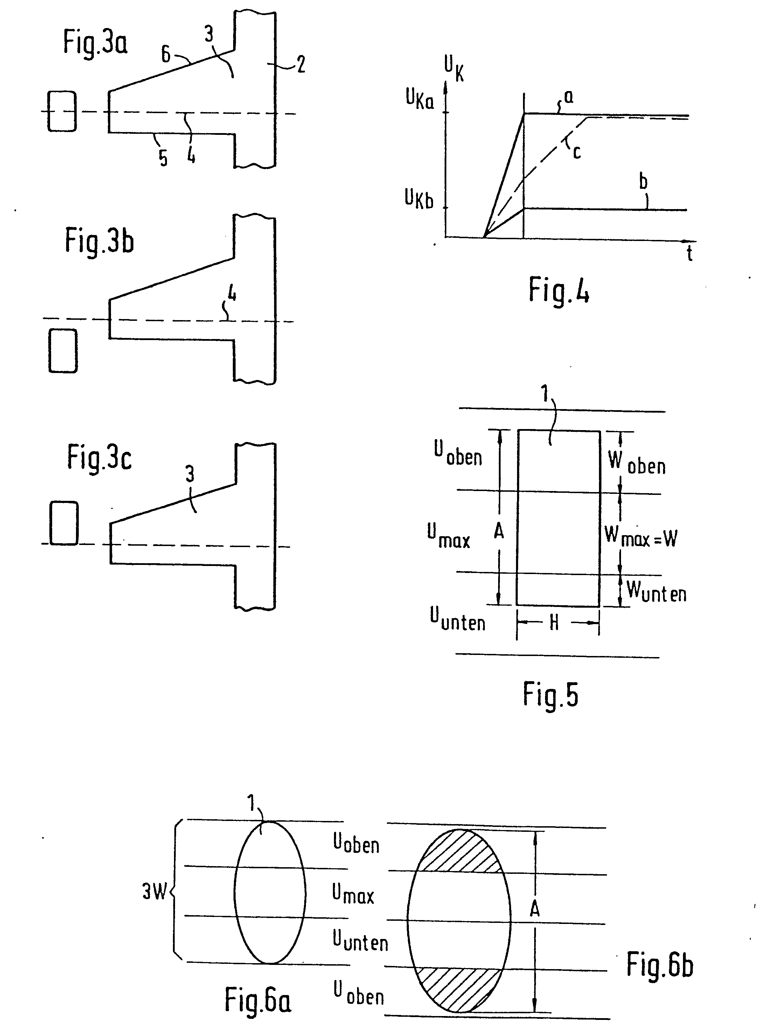

In Figur 3 ist eine vorteilhafte Ausführungsform eines Zahnes 3 einer kammförmigen Elektrode 2 dargestellt. Die untere Begrenzung 5 des Zahnes verläuft horizontal in Zeilenrichtung, während die obere Begrenzung 6 schräg dazu verläuft. Der Zahn weist mindestens die vertikale Ausdehnung A auf, auf die ein Elektronenfleck 1 in den optisch nicht genutzten Randbereichen des Bildschirmes automatisch eingestellt wird. Figur 3a stellt einen Auftrefffleck dar, der von einem Elektronenstrahl erzeugt wird, der in der gestrichelt angedeuteten Sollage 4 auf den Zahn 3 läuft. Bei Figur 3b weicht der Elektronenstrahl nach unten von der Sollage und bei Figur 3c nach oben von der Sollage ab.

In Figur 4 ist der zeitliche Verlauf der Korrekturspannung $U_k$, wie sie am Widerstand R abgegriffen wird, unter der Voraussetzung der verschiedenen Auftrefflagen des Elektronenstrahles gemäß den Figuren 3a - c dargestellt. Gemäß Figur 3a trifft der Elektronenstrahl bei seinem Zeilenlauf nach rechts mit der Breite A seines Auftreffflecks 1 auf die Breite A des Zahnes 3 auf. Die Spannung $U_k$ steigt schnell an und bleibt dann konstant auf einem Maximalwert $U_{ka}$. Im Fall gemäß Figur 3b, wo der Elektronenstrahl von der Sollage nach unten abweicht, trifft der Auftrefffleck nie mit seiner vollen Ausdehnung A auf den Zahn 3 auf. Die abgegriffene Spannung $U_{kb}$ ist erheblich kleiner als die im Fall des vollen Auftreffens gemessene

./.

E.Weiss-14

Spannung $U_{ka}$. Im Falle des Abweichens des Elektronenstrahles
von der Sollage nach oben, wie es in Figur 3c gezeichnet ist,
steigt die abgegriffene Spannung $U_k$ konstant an, da die obere
Begrenzung des Zahnes 3 in Zeilenrichtung ansteigend verläuft,
und daher der Auftrefffleck immer größere Gebiete des Zahnes 3
überdeckt. Durch den Verlauf der Spannung läßt sich also die
Strahlabweichung in ihrer Richtung d.h. nach oben oder nach
unten festlegen, während der Wert der abgegriffenen Spannung
ein Maß für die Größe der Abweichung ist. Aus der Größe der
Korrekturspannung $U_k$ wird eine weitere Spannung gewonnen,
welche der Vertikalablenkung für den Elektronenstrahl zugeführt wird, und welche die Sollage des Elektronenstrahls einstellt.

Im weiteren soll erläutert werden, wie die drei Spannungen,
R, G, B, welche in einer normalen Dreistrahlfarbbildröhre zur
Steuerung des Strahlstromes der drei Elektronenstrahlen zur
Verfügung stehen, zweckmäßigerweise verwendet werden, um bei
der vorgeschlagenen Bildröhre Strahllage, Strahlausdehnung
und Strahlstrom festzulegen. Dazu ist folgendes vorauszuschicken. Bei der Farbfernsehübertragung werden genormte
Farbwerte verwendet. Dies führt dazu, daß auch in Farbbildröhren Leuchtstoffe mit genormten Farben verwendet werden.
Die folgenden Ausführungen beziehen sich daher ausschließlich
auf solche vorgeschlagene Farbbildröhren, in denen Leuchtstoffe mit herkömmlich genormten Leuchtfarben verwendet werden.
Desweiteren ist zu bemerken, daß in zur Zeit ausschließlich
verwendeten Schattenmaskenröhre alle Auftreffflecke der Elektronenstrahlen die gleiche Ausdehnung besitzen. Es sei nun
eine Farbe darzustellen, bei der zur Anregung der blauen
Leuchtstoffstreifen der halbe Strahlstrom benötigt wird wie
zu Anregung der roten Leuchtstoffstreifen. Übertragen auf die vorgeschlagene Farbbildröhre, bei der nur ein einziger Elektronenstrahl zur Verfügung steht, bedeutet dies, daß dieser Elektronenstrahl von den blauen Leuchtstoffstreifen nur die halb so große Fläche anregen darf, verglichen zur angeregten Fläche der roten Leuchtstoffstreifen. Dies soll quantitativ durch Figur 5 veranschaulicht werden.

In Figur 5 sind drei Leuchtstoffstreifen dargestellt, welche von einem Elektronenstrahl mit rechteckigem Auftrefffleck 1 getroffen werden. Die Leuchtstoffstreifen sind hier jedoch nicht mehr mit r, g, b bezeichnet. Es wird vielmehr von der Festlegung ausgegangen, daß der Mittelpunkt des Auftrefflecks auf dem Leuchtstoffstreifen liegen soll, dem die maximale Ansteuerspannung $U_{max}$ zugeordnet ist. Im Fernsehgerät sollen also z.B. die drei Spannungen R, G, B zur Steuerung der drei Elektronenstrahlströme vorliegen. Davon sei z.B. die Spannung R die maximale Spannung. In diesem Fall wäre also R = $U_{max}$, und damit würde der Mittelpunkt des Auftrefflecks auf einem roten Leuchtstoffstreifen liegen. In den bisher in den Figuren gezeigten Ausführungsform liegt über einem roten Leuchtstoffstreifen ein blauer Leuchtstoffstreifen und unter dem roten Leuchtstoffstreifen ein grüner Leuchtstoffstreifen. Im herkömmlichen Farbfernsehgerät ist der Strahlstrom zur Anregung des blauen Leuchtstoffstreifens durch die Spannung B und der des grünen Leuchtstoffstreifens durch die Spannung G gegeben. In Figur 5 werden diese Spannungen durch $U_{oben}$ und durch $U_{unten}$ bezeichnet. Beim bisher beschriebenen Ausführungsbeispiel wäre also $U_{oben}$ = B, $U_{max}$ = R und $U_{unten}$ = G. Es wurde nun schon beispielsweise erläutert, es sei eine Farbe darzustellen, bei der ein Strahlstrom für die blaue Farbe benötigt werde, der halb so groß sei wie der Strahlstrom für die rote Farbe. Wegen der Flächengleichheit der Auftrefflecke bei bisherigen

Farbbildröhren entspricht aber, wie ebenfalls schon erläutert, das Strahlstromverhältnis dem Steuerspannungsverhältnis. Es gilt also z.B. :

(1) $I_{oben}/I_{max} = U_{oben}/U_{max}$

Im Fall der vorgeschlagenen Farbbildröhre werden die Strahlströme für die einzelnen Farben jedoch nicht direkt über die Spannungsverhältnisse, sondern vielmehr direkt über die Flächenverhältnisse des Auftreffflecks auf den verschiedenen Leuchtstoffstreifen bestimmt. Bei einer Höhe H des Auftreffflecks 1 in horizontaler Richtung und Weiten $W_{oben}$, $W_{max}$ und $W_{unten}$ in vertikaler Richtung auf den verschiedenen Leuchtstoffstreifen sind die Flächenteile des Auftreffflecks auf den verschiedenen Leuchtstoffstreifen einfach gegeben durch $W_{oben}$ x H, $W_{max}$ x H und $W_{unten}$ x H. Dabei gelte immer, daß $W_{max}$ = W, also der Breite der Leuchtstoffstreifen sei. Das Stromverhältnis ist nun also gegeben durch:

$$I_{oben}/I_{max} = W_{oben} \times H/W \times H \qquad (2)$$

Zusammen mit (1) ergibt sich daraus:

$$U_{oben}/U_{max} = W_{oben}/W$$

oder, aufgelöst nach $W_{oben}$:

$$W_{oben} = W \times U_{oben}/U_{max}$$

und entsprechend:

$$W_{unten} = W \times U_{unten}/U_{max}$$

Die Gesamtausdehnung A des Auftreffflecks in vertikaler Richtung ergibt sich dadurch zu:

$$A = W_{oben} + W_{max} + W_{unten} = W (1 + U_{oben}/U_{max} + U_{unten}/U_{max})$$

E.Weiss-14

Die Ausdehnung des Elektronenstrahles wird aber durch die Fokussierspannung bestimmt. Zur Beeinflussung der Elektronenstrahlausdehnung, und damit insbesondere des Auftreffflecks auf den Leuchtstoffstreifen sind verschiedene Ausführungsformen, z.B. die der DE-OS 29 05 479 bekannt. Im vorliegenden Fall wird also eine Fokussierelektrode in der Elektronenkanone eine Spannung zugeführt, welche proportional zu $(1 + U_{oben}/U_{max} + U_{unten}/U_{max})$ ist.

Die Ausdehnung des Elektronenstrahles kann auch dadurch scheinbar vergrößert werden, daß er sehr schnell im Vergleich zu seinem Horizontallauf auf- und abbewegt wird. Dazu wird die zu $(1 + U_{oben}/U_{max} + U_{unten}/U_{max})$ proportionale Spannung in eine Wechselspannung mit einer der proportionalen Spannung proportionalen Amplitude umgewandelt und diese Wechselspannung der Vertikalablenkung oder besser einer Hilfsablenkspule zugeführt. Die Amplitude ist dabei so gewählt, daß der schnell auf- und abbewegte Elektronenstrahl den Eindruck eines Auftreffflecks der Ausdehnung A bewirkt.

Im/
bisherigen wurde beschrieben, wie die Strahlausdehnung aus in herkömmlichen Fernsehgeräten vorliegenden Spannungen R, G, B darstellbar ist. Nun soll erläutert werden, wie die Strahllage eingestellt wird. Dies ist direkt aus Figur 5 und den bisherigen Gleichungen entnehmbar. Der Mittelpunkt des Auftreffflecks 1 liegt nämlich um die Entfernung A/2 unter der Oberkante des Auftreffflecks. Bezogen auf die Oberkante des Leuchtstoffstreifens, dem die maximale Spannung $U_{max}$ zugeordnet ist, liegt der Mittelpunkt des Auftreffflecks also bei $W_{oben}$ - A/2. Zusammen mit (2) ergibt sich:

./.

E.Weiss-14

$$W_{oben} - A/2 = W/2 \ (1 + U_{oben}/U_{max} - U_{unten}/U_{max})$$

Wenn $U_{oben}$ und $U_{unten}$ = O sind, liegt der Mittelpunkt des Auftreffflecks also genau mitten auf dem Leuchtstoffstreifen, dem
die jeweilige einzige Spannung in diesem Fall = $U_{max}$ zugeordnet
ist. Die Ausdehnung des Auftreffflecks ist gerade der Weite W
eines Leuchtstoffstreifens. Je nach der Größe der Spannungen
$U_{oben}$ oder $U_{unten}$ wird der Auftrefffleck von der Mitte des
Leuchtstoffstreifens, dem $U_{max}$ zugeordnet ist, weiter nach oben
oder nach unten verschoben. Die Korrekturspannung, die aus
$(1 + U_{oben}/U_{max} - U_{unten}/U_{max})$ gewonnen wird, wird genau so
wie die Spannung, welche von den kammförmigen Elektroden zur
Sollagekorrektur gewonnen wird, der vertikal Ablenkung zugeführt, welche den Elektronenstrahl entsprechend so ablenkt,
daß er die Lage einnimmt, welche die geforderten geometrischen
Bedingungen erfüllt.

Zusammengefaßt ergibt sich also folgendes Verfahren unter der
Annahme eines rechteckigen Auftreffflecks: Von den drei Spannungen R, G, B welche in einer Dreistrahlfarbbildröhre zur
Steuerung des Strahlstroms der drei Elektronenstrahlen zur
Verfügung stehen, wird zunächst die maximale Spannung $U_{max}$
festgestellt. Wenn zwei der drei Spannungen oder gar alle
drei gleich sind wird willkürlich eine der Spannungen als $U_{max}$
festgelegt. Daraufhin wird festgestellt, welche Farbstreifen
über und unter dem Farbstreifen liegen, dem $U_{max}$ zugeordnet
ist. Danach wird die Vertikalkoordinate des Auftreffflecks
des Elektronenstrahls durch eine zu $(U_{max} + U_{oben} - U_{unten})$
proportionale Spannung $U_y$ festgelegt. Für $U_y$ = O verläuft
dabei der Elektronenauftreffmittelpunkt in der Mitte des $U_{max}$

./.

E.Weiss-14

zugeordneten Leuchtstoffstreifens. Die vertikale Auftrefffleckausdehnung A wird durch eine zu ($U_{max}$ + $U_{oben}$ + $U_{unten}$)
proportionale Spannung, welche der Fokussierelektrode der
Elektronenkanone zugeführt wird, bestimmt. Die Strahlhelligkeit wird ebenfalls proportional zu $U_{max}$ + $U_{oben}$ + $U_{unten}$ eingestellt.

Eine Problematik bei der Einstellung ergibt sich dadurch, daß
genau rechteckförmige Auftreffflecke in der Praxis nur sehr
schwer zu erzielen sind. Die Auftreffflecke besitzen vielmehr normalerweise ovale (oder runde) Form wie es in Figur 6a dargestellt
ist. In Figur 6a ist solche ein ovaler Auftrefffleck 1
dargestellt, welcher sich über die Weite 3W dreier benachbarter
Leuchtstoffstreifen erstreckt. Es bestehe nun die Forderung,
daß der Auftrefffleck von allen drei Leuchtstoffstreifen jeweils gleiche Flächen überdecken solle. Es ist sofort ersichtlich, daß dies mit einem ovalen Auftrefffleck nicht erzielbar
ist. Die vom Auftrefffleck überdeckten Flächen am oberen und
unteren Leuchtstoffstreifen sind erheblich geringer als die
am mittleren Leuchtstoffstreifen überdeckte Fläche. Es muß
also eine andere als die bisher beschriebene Einstellart vorgenommen werden, wenn von einem ovalen Leuchtstofffleck drei
gleich große Flächengebiete auf drei benachbarten Leuchtstoffstreifen zum Leuchten angeregt werden sollen. Wie dies zweckmäßigerweise erfolgt ist in Figur 6b dargestellt.

In Figur 6b stimmt der Mittelpunkt des Auftreffflecks nicht
mehr mit der Mitte des $U_{max}$ zugeordneten Leuchtstoffstreifens
überein, vielmehr ist der Mittelpunkt des Auftreffflecks auf
die Unterkante des $U_{max}$ zugeordneten Leuchtstoffstreifens bezogen. Aufgrund der Symmetrieverhältnisse ist nun sofort ersichtlich, daß die vom Auftrefffleck überdeckten Flächenanteile der $U_{max}$ und $U_{unten}$ zugeordneten Leuchtstoffstreifen

./.

E.Weiss-14

identisch sind.  Im Gegensatz zum den bisherigen Ausführungsbeispielen werden nun aber vom Auftrefffleck zwei Leuchtstoffstreifen der $U_{oben}$ zugeordneten Farbe getroffen.  Diese
Gebiete sind schraffiert gezeichnet.  Es ist nun ohne weiteres
möglich, die Ausdehnung A des Auftrefflecks so zu wählen, daß
die Summe der schraffiert gezeichneten Flächenanteil jeweils
einem der $U_{max}$ bzw. $U_{unten}$ zugeordneten Flächenteile von
Leuchtstoffstreifen entspricht.  Der Auftreffleckmittelpunkt
wird also nicht mehr auf die Mitte des $U_{max}$ zugeordneten
Leuchtstoffstreifens sondern auf dessen Unterrand bezogen,
und die Ausdehnung des Auftrefflecks wird so gewählt, daß
vier Streifen vom Auftreffleck getroffen werden, und zwar
wird dies so lange durchgeführt, bis die zur Farbdarstellung
notwendige Flächendifferenz zwischen oberer oder unterer angeschnittener Fläche und der mittleren Fläche gleich oder kleiner
ist der mittleren Fläche, und daß ab Eintritt dieser Bedingung
ein Verfahren analog zu den vorig beschriebenen verwendet wird.

In der bisherigen Beschreibung wurde ausschließlich davon ausgegangen, daß Leuchtstoffstreifengruppen aus jeweils drei
Leuchtstreifen mit Leuchtstoffen verwendet werden, die für
den Empfang von Farbfernsehprogrammen genormt sind.  Es ist
selbstverständlich möglich, auch andere Leuchtstoffe mit nicht
genormten Farben zu verwenden.  Dies muß in den bisher dargestellten Formeln und Verfahren durch entsprechend gewählte
Proportionalitätsfaktoren berücksichtigt werden, welche der
Abweichung der gewählten Farben von den genormten Farben
Rechnung tragen.  Statt der Verwendung von drei Leuchtstoffstreifen unterschiedliche Farben ist es selbstverständlich
auch möglich, Leuchtstoffstreifengruppen mit vier unterschiedlichen Farben oder mit nur zwei unterschiedlichen Farben zu
verwenden.  Die Verwendung von vier Farben ist zunächst eine
Überbestimmung, die Verwendung wurde dennoch verschiedentlich
vorgeschlagen, daß sie teilweise zu technischen Erleichterungen

0034302

E.Weiss-14

in speziellen Ausführungsformen dient. Die Darstellung mit
nur zwei Farben ist der Land'schen Farbentheorie entnommen.
Farbfernsehgeräte, die technisch die Grundlagen dieser Theorie
anwenden, haben sich jedoch nicht durchgesetzt, da der jeweilige Farbeindruck stark vom Beobachter abhängt. Bei Verwendung
von nur zwei Leuchtstoffstreifen würde zweckmäßigerweise der
Auftrefffleckdurchmesser konstant gehalten werden und nur die
Lage des Elektronenstrahles und der Strahlstrom variiert
werden.

E.Weiss-14

<u>Patentansprüche</u>:

1) Farbbildröhre mit einem Bildschirm mit in Zeilenrichtung
   verlaufenden Gruppen von Leuchtstoffstreifen, die
                       durch auf sie auftreffende Elektronen
   zum Leuchten gebracht werden, mit einem die Elektronen
   ablenkenden Ablenksystem,
   d a d u r c h   g e k e n n z e i c h n e t, daß die
   Farbbildröhre nur eine Elektronenkanone aufweist, daß mit
   dem durch diese Elektronenkanone erzeugten Elektronenstrahl
   der Bildschirm Gruppe nach Gruppe in Zeilenrichtung abgetastet wird, daß dabei die am jeweiligen Ort zu erzeugende
   Farbe ihrer Farbart nach durch die Auftrefflage des Elektronenstrahls innerhalb einer Leuchtstoffstreifengruppe
   senkrecht zur zeilenmäßigen Erstreckung der Gruppe und
   durch den Strahldurchmesser festgelegt ist, und daß die
   Helligkeit durch den Strahlstrom gesteuert ist.

2) Farbbildröhre nach Anspruch 1,
   d a d u r c h   g e k e n n z e i c h n e t, daß außerhalb
   des optisch genutzten Bereichs des Bildschirms an dessen
   rechtem und/oder linkem Rand eine vertikalverlaufende
   kammförmige Elektrode angebracht ist, auf die der Elektronenstrahl bei seinem Zeilenlauf auftrifft , wodurch ein
   Steuerpuls erzeugt wird, dessen Größe von der Abweichung
   des Elektronenstrahls von der Zeilensollage abhängt, und
   daß entsprechend der Abweichung der Vertikalablenkung ein
   Signal zur Korrektur der Abweichung zugeführt wird.

Dr. J/Sam
21.12.1979

./.

E.Weiss-14

3) Farbbildröhre nach Anspruch 2,
d a d u r c h   g e k e n n z e i c h n e t, daß die Zähne(3)
der kammförmigen Elektrode(2) eine in Zeilenrichtung verlaufende horizontale(5) Begrenzung und eine schräg verlaufende
Begrenzung(6) aufweisen, und daß die Mindestbreite der Zähne
dem Durchmesser des Elektronen auftreffflecks in den Randgebieten entspricht.

4) Farbbildröhre nach einem der vorangehenden Ansprüche,
d a d u r c h   g e k e n n z e i c h n e t, daß jede
Leuchtstoffstreifengruppe aus drei Streifen jeweils der
Leuchtfarben Rot, Grün und Blau jeweils der Farbart besteht, die für den Empfang von Farbfernsehprogrammen
genormt ist.

5) Verfahren zum Einstellen der Farbe bei einer Farbbildröhre
nach Anspruch 4,
d a d u r c h   g e k e n n z e i c h n e t, daß unter Voraussetzung eines im wesentlichen rechteckigen Elektronenstrahls von den drei Spannungen R, G, B, welche in einer
Dreistrahlfarbbildröhre zur Steuerung des Strahlstroms der
drei Elektronenstrahlen zur Verfügung stehen,

a) zunächst die maximale Spannung $U_{max}$ festgestellt wird,
b) daß bei gleichen Spannungen eine als $U_{max}$ festgelegt wird,
c) dáß daraufhin festgestellt wird, welche Farbstreifen dicht
über und unter dem Farbstreifen liegen, dem $U_{max}$ zugeordnet ist,
d) daß dann die Koordinate des Auftreffmittelpunkts durch
eine der Vertikalablenkung zugeführte Spannung

./.

E.Weiss-14

$$U_y = K (U_{max} + U_{oben} - U_{unten})$$

mit K = Proportionalitätskonstante

$U_{oben}$ = Spannungswert, der dem oberhalb liegenden Farbstreifen zugeordnet ist

$U_{unten}$ = Spannungswert, der dem unterhalb liegenden Farbstreifen zugeordnet ist

festgelegt wird,

e) daß dabei bei $U_y = U_{max}$ der Elektronenauftreffmittelpunkt in der Mitte des $U_{max}$ zugeordneten Leuchtstoffstreifens verläuft,

f) daß die vertikale Auftrefffleckausdehnung A durch

$$A = W (1 + U_{oben}/U_{max} + U_{unten}/U_{max})$$

mit W = Leuchtstoffstreifenbreite
festgelegt ist, und daß eine der angegebenen Größe proportionale Spannung entweder einer Fokussiereinrichtung zugeführt wird, durch die der festgelegte Strahldurchmesser eingestellt wird, oder daß diese proportionale Spannung in eine Wechselspannung mit einer der proportionalen Spannung proportionale Amplitude umgewandelt wird, daß diese Wechselspannung der Vertikalablenkspule oder einer Hilfsablenkspule zugeführt wird, und daß die Amplitude so gewählt ist, daß der schnell auf- und abbewegte Elektronenstrahl den Eindruck eines Auftreffflecks der Ausdehnung A bewirkt.

g) daß die Helligkeit proportional zu R + B + G eingestellt wird.

6) Verfahren zum Einstellen der Farbe einer Farbbildröhre nach Anspruch 4,
d a d u r c h   g e k e n n z e i c h n e t, daß unter Vor- aussetzung einer Elektronenstrahlform, bei der, bei einem

E.Weiss-14

sich über drei Streifenbreiten vertikal erstreckenden Auftrefffleck, die Auftrefffleckfläche auf dem oberen oder
unteren Streifen kleiner ist als die Fläche auf dem mittleren Streifen, der Auftrefffleckmittelpunkt solange auf
den Unterrrand des Streifens, dem die maximale Spannung
zugeordnet ist, bezogen wird und vier Streifen vom Auftrefffleck getroffen werden, bis die zur Farbdarstellung
notwendige Flächendifferenz zwischen oberer und/oder unterer angeschrittener Fläche und der mittleren Fläche
gleich oder kleiner ist der mittleren Fläche und daß ab
Eintritt dieser Bedingung ein Verfahren analog zu Anspruch
5 verwendet wird.

Fig.1

Fig.2

$U_K$

R

Anode

E.WRISS-14
S.2.80

Fig.3a

Fig.3b

Fig.3c

Fig.4

Fig.5

Fig.6a

Fig.6b